# FASCICULE DE BREVET EUROPEEN

(11) **EP 0 845 293 B1**
(45) Date de publication et mention de la délivrance du brevet: **13.08.2003**
(21) Numéro de dépôt: 97402830.0
(22) Date de dépôt: 25.11.1997
(51) Int. Cl.: B01J 19/32

(54) **Dispositif d'échange de matière et de chaleur**
Vorrichtung zum Stoff- und Wärmeaustausch
Device for mass and heat exchange

(30) Priorité: 28.11.1996 FR 9614606; 22.05.1997 FR 9706257
(43) Date de publication de la demande: 03.06.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Lehman, Jean-Yves, 94700 Maisons Alfort (FR); Werlen, Etienne, 78000 Versailles (FR)
(74) Mandataire: Mercey, Fiona Susan

(56) Documents cités:
- EP-A- 0 638 358
- EP-A- 0 671 207
- WO-A-86/06296
- WO-A-90/10497

## Description

La présente invention concerne un dispositif d'échange de matière et de chaleur selon le préambule de la revendication 1.

Les garnissages ordinairement utilisés comprennent des bandes ondulées comprenant des ondulations alternées parallèles disposées chacune dans un plan général vertical et les unes contre les autres les ondulations étant obliques et descendant dans des sens opposés d'une bande à la suivante. Le taux de perforation est d'environ 10 % pour ces garnissages dits ondulés-croisés.

GB-A-1004046 divulgue des garnissages du type ondulé-croisé.

CA-A-1095827 propose une amélioration de ce type de garnissage en ajoutant une perforation dense de petit diamètre pour permettre au liquide de transiter de part et d'autre des bandes ondulées croisées.

WO-A-94/12258 propose une amélioration de ce type de garnissage basée sur un positionnement exact des bandes les unes par rapport aux autres dans un plan vertical, par un système d'emboîtement. Ce dispositif a pour but de loger plus de surface de garnissage dans un même volume, car l'emboîtement permet une interpénétration des bandes.

EP-A-0 671 207, EP-A-0 638 358, WO-A-86/06296 et WO-A-90/10497 divulguent des dispositifs selon le préambule de la revendication 1.

Dans WO-A-86/06296, la structure comprend des pyramides à bases ouvertes, et à faces latérales alternativement ouvertes et fermées, raccordées par leurs pointes de manière à constituer une multitude de pales de ventilateur mettant le gaz en rotation pour intensifier le contact entre le gaz et le liquide. Une caractéristique fondamentale de cette structure est de pouvoir être obtenue par assemblage de feuilles métalliques perforées et pliées. Cette fois-ci, la perforation n'est plus seulement destinée à optimiser la circulation du liquide mais aussi à permettre au gaz de passer à travers les bandes pliées croisées, le taux de perforation étant de l'ordre de 50 %.

Paradoxalement, c'est juste à ce moment de début de contestation radicale du garnissage de l'ondulé croisé que celui-ci a commencé à être utilisé dans la séparation des gaz de l'air. Cette utilisation relativement tardive s'explique en partie par les hautes performances des plateaux cryogéniques vis à vis des autres plateaux du marché (HETP, hauteur équivalente à un plateau théorique, de l'ordre de 10 cm, et perte de charge faible).

Dans WO-A-90/10497, on améliore la structure ci-dessus obtenue en faisant coïncider les faces des pyramides de deux couches successives, ce qui crée des canaux transversaux par rapport aux bandes, et favorise le mélange transversal. Il mentionne clairement l'intérêt d'une double perforation : une à damier (donc à 50 % de surface perforée) pour le gaz, et une perforation secondaire dans les « faces fermées » pour organiser le ruissellement du liquide.

Cette dernière demande de brevet a donné naissance au produit Sulzer « Optiflow™ » qui représente la première réalisation d'une nouvelle génération, donnant accès à des performances notablement accrues par rapport aux ondulés-croisés maintenant classiques (HETP réduite de l'ordre de 25 à 30 % à débit vapeur constant; ou débit d'engorgement augmenté de l'ordre de 25 à 30 % à HETP constante).

Ce brevet et ces demandes de brevet permettent d'isoler deux axes de recherche importants. Le premier a pour but d'optimiser l'écoulement du liquide pour que la surface mouillée soit la plus grande possible et pour que le liquide se distribue dans toutes les directions en se remélangeant au cours du ruissellement dans le garnissage. Le second a pour but d'optimiser l'écoulement du gaz, c'est à dire d'obtenir un écoulement vertical le plus turbulent possible, sans canaux d'écoulement privilégiés, ni zones de faible circulation.

Jusqu'à maintenant, l'écoulement de phase liquide a été étudié sur des structures type ondulé-croisé. On a découvert que des perforations de faible diamètre (environ 10%) favorisent le passage du liquide de chaque côté des bandes. Plusieurs améliorations ont été proposées : CA-A-1095827 revendique un positionnement précis des trous par rapport aux plis et WO-A-94/12258 revendique le positionnement relatif des bandes, par interpénétration des bandes. En fait il apparaît que le positionnement des trous n'augmente pas sensiblement l'efficacité du garnissage car la fonction principale des trous est de faire passer le liquide d'un côté à l'autre de.la bande. Seuls le taux de perforation et le diamètre des trous influent donc sur l'efficacité.

L'idée des pyramides introduite par WO-A-86/06296 et. WO-A-90/10497 introduit un nouveau type de perforations: les perforations pour le passage du gaz (représentant environ 50% de la surface). Ces perforations permettent de réduire la perte de charge et de créer des ventilateurs favorisant le brassage du gaz. Ces documents sont muets sur la circulation du liquide.

Le fait de raccorder les pyramides par les pointes (« sommets » et « coins », on désigne par « coins » les pointes situées sur la base) présente un inconvénient important : du fait du peu de matière subsistant en ces points, la tenue mécanique de l'ensemble impose de lier physiquement ces « pointes » par un procédé mécanique de type agrafage, ligature, soudage ou couture qui nécessite des outils complexes et coûteux, et se traduit donc par un coût assez élevé. On peut en outre remarquer que, le nombre de ces fixations varie comme le nombre des pyramides, c'est-à-dire comme le cube de l'inverse de leur dimension, ce qui limite la surface spécifique économiquement accessible de ce type de garnissage. D'autre part, le principe de la perforation en damier entraîne un taux de chutes de l'ordre de 50 %; c'est particulièrement dommage quand la matière du garnissage est d'un coût élevé, un tissu par exemple.

Il apparaît aussi que cette structure est très aérée et que la HETP pourrait encore être réduite si on arrivait à loger une partie des chutes dans la structure sans dégrader la turbulence du gaz ni le taux de mouillage de la surface .

Le but de la présente invention est de créer un dispositif d'échange de chaleur et de matière ayant de bonnes propriétés quant à l'écoulement du gaz, incluant une série d'améliorations concernant l'étalement, la distribution et le mélange du liquide et à fabrication simplifiée par rapport à ceux de l'art antérieur et donc de permettre de réaliser pratiquement des garnissages très fins, donc à HETP encore plus petite.

En particulier, un but de l'invention est de fournir un dispositif selon le préambule de la revendication 1 qui permette de limiter les chutes sans dégrader la turbulence des gaz ni le taux de mouillage.

Selon un objet de l'invention, il est ainsi prévu un dispositif d'échange de chaleur selon la revendication 1.

Les déflecteurs des ventilateurs peuvent être plans ou non, symétriques ou non, déduits par rotation autour d'un axe vertical ou non.

Les revendications 2 à 12 précisent d'autres aspects de l'invention.

Selon un autre objet de l'invention, il est prévu un procédé de fabrication selon la revendication 13.

Les variantes de ce procédé font l'objet des revendications 14 à 23.

L'invention a en outre pour objet un procédé selon la revendication 24.

L'invention a également pour objet une installation. selon la revendication 25.

D'autres aspects de l'invention sont maintenant décrits, en se référant aux dessins suivants dont :
- la figure 1 montre la vue en perspective de deux ventilateurs de sens alternés d'un dispositif selon l'invention.
- la figure 2 montre l'écoulement du liquide sur les déflecteurs d'un dispositif selon l'invention.
- la figure 3 montre la représentation schématique du découpage d'une feuille métallique selon l'invention.
- la figure 4 montre deux représentations schématiques de la feuille métallique de la figure 3 pliée en accordéon: 4.1 montre une vue en perspective et 4.2 une vue dans l'axe des plis.
- la figure 5 montre deux représentations schématiques de deux feuilles métalliques de la figure 4 assemblées: 5.1 montre une vue en perspective et 5.2 une vue dans l'axe des plis d'une des feuilles.
- la figure 6 montre le découpage industriel d'une feuille métallique selon l'invention.
- la figure 7 montre la structure obtenue en assemblant deux feuilles découpées et pliées selon la figure 6.
- la figure 8 montre plusieurs détails de la structure de la figure 7: 8.1 montre les quatre pales qui participent à une zone d'appui, 8.2 montre une vue de dessus de 8.1 et 8.3 montre deux ventilateurs superposés créés par la structure.
- la figure 9 montre un agrandissement de la zone 7B de la figure 7 sur lequel on a représenté l'écoulement du liquide.
- la figure 10 montre la fabrication d'un point d'appui par découpage pliage et l'emboîtement de deux couches.
- la figure 11 montre plusieurs solutions de pliage permettant l'emboîtement des couches les unes sur les autres.
- la figure 12 montre une virole de colonne avec des garnissages structurés constitués par le dispositif de la présente invention.

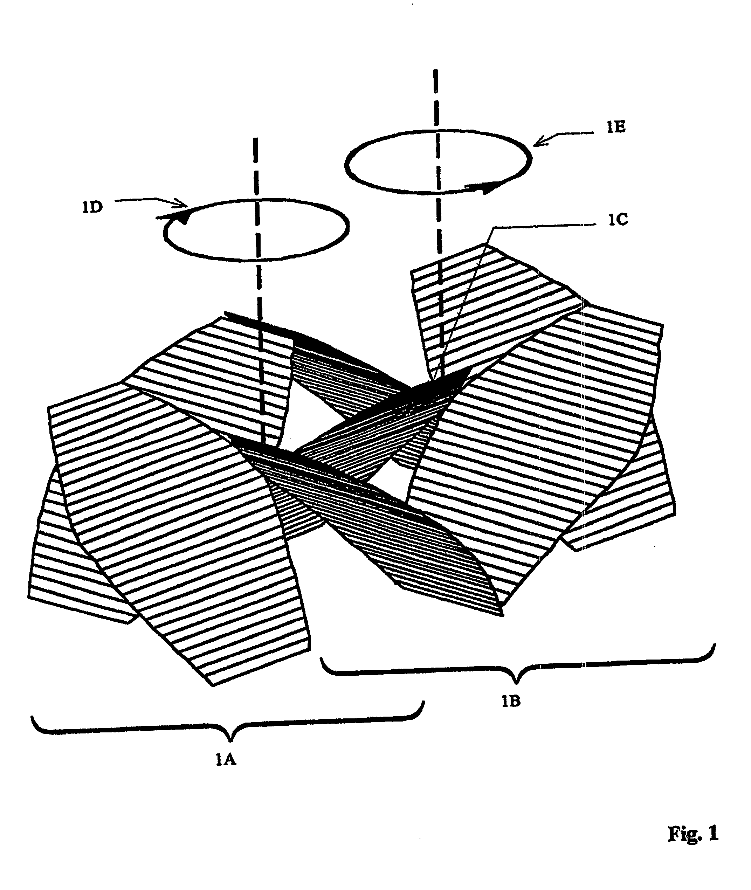

La figure 1 représente deux ventilateurs fixes adjacents (1A et 1B) dans une couche horizontale. Les déflecteurs ne sont pas nécessairement déduits par rotation. Ces deux ventilateurs brassent l'écoulement gazeux en sens inverse (vortex 1D et 1E), créant ainsi un maximum de turbulence. On peut remarquer que le déflecteur 1C est commun aux deux ventilateurs. La structure complète est obtenue en répétant ce motif dans les trois directions, avec ou sans variantes de la géométrie des déflecteurs. Les documents cités ci-dessus sont muets sur la circulation du liquide dans la structure.

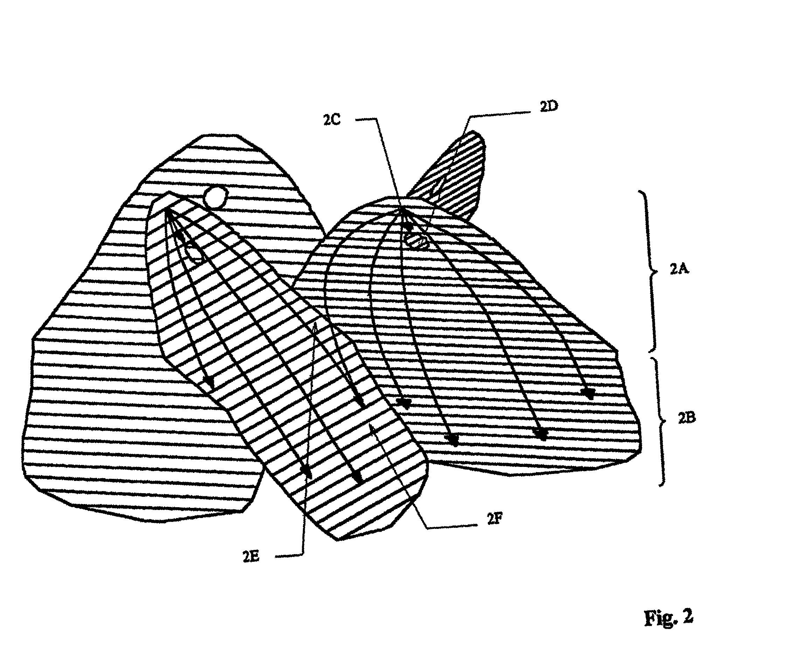

La figure 2 montre l'étalement du liquide sur les déflecteurs. On verra plus tard la manière de relier les déflecteurs entre eux entre deux couches horizontales. Supposons seulement que chaque déflecteur est alimenté par son sommet (2C) par le liquide ruisselant. Il faut bien sûr que le maximum de surface des déflecteurs soit mouillée. Cette remarque suffit à esquisser la meilleure forme à donner aux déflecteurs.

La partie supérieure (2A) doit être « pointue » de manière à suivre l'étalement du liquide à partir de son point d'alimentation. En revanche une fois cet étalement obtenu, le déflecteur peut garder sa largeur maximum sur une certaine distance pour augmenter la surface de ruissellement (2B). En effet, le collectage est plus facile et peut se faire sur des arêtes de faible pente avec un contour faiblement incliné. Ceci conduit à une forme « ventrue » .

La distribution optimale du liquide des deux côtés des déflecteurs conduit à percer un trou (2D) proche du sommet (2C) permettant à une partie du liquide de passer de l'autre côté.

Afin qu'il n'y ait pas de chemin privilégié pour le liquide, il convient de faire en sorte qu'un même filet de liquide soit distribué dans plusieurs directions et constamment remélangé. Ainsi, un segment d'arête (2E) commun à deux déflecteurs sépare le liquide s'écoulant sur le déflecteur en deux et crée une zone de mélange (2F).

Pour une raison de coût, il faut que les déflecteurs puissent être fabriqués à partir d'un matériau en feuille. Malheureusement la technique de perforation-pliage et/ou perforation-cintrage utilisée jusqu'à maintenant pour fabriquer les garnissages structurés ne permet pas d'obtenir une richesse de formes à la hauteur des besoins de l'architecture décrite ci-dessus.

Il existe cependant une méthode qui permet d'obtenir des formes très riches à partir de produit plat : le découpage-pliage. Il suffit pour s'en convaincre de regarder certains « livres en relief » ou certains emballages en carton. Le pliage est bien connu pour fabriquer des polyèdres. Ce procédé n'a jamais, à notre connaissance, été utilisé pour fabriquer des garnissages structurés. On peut aussi lui associer un emboutissage, afin d'obtenir des surfaces non développables. Bien que très riche de possibilités, ce procédé peut être particulièrement économique puisque les opérations successives de découpage, de pliage et même d'emboutissage peuvent être intégrées dans un même outil de presse.

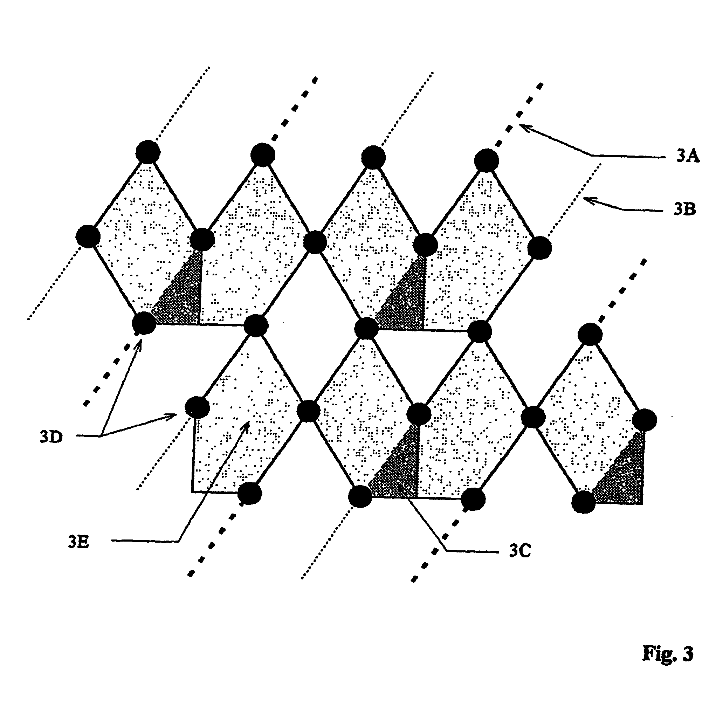

La figure 3 montre le découpage schématique d'une feuille avant le pliage, dans laquelle les déflecteurs sont les quadrilatères « pleins » (3E). La feuille ainsi découpée est ensuite pliée en accordéon. selon les lignes pointillées. Les lignes en pointillés épais (3A) sont des plis « vallée », tandis que les pointillés fins (3B) marquent des plis « crête ». Il faut bien noter que ces lignes de pli sont discontinues car les parties grisées (3C) ne sont pas pliées avec le reste et forment donc, après pliage, des saillies au delà des deux plans contenant les plis crête et vallée. En fait, le pliage n'intervient que sur les zones symbolisées par des points noirs (3D), qui forment à la fois une liaison entre les déflecteurs et un point d'appui et/ou d'emboîtement servant à l'empilement et au positionnement lors de l'empilage des feuilles en accordéon. On verra plus loin par quels dispositifs peuvent être constituées ces zones.

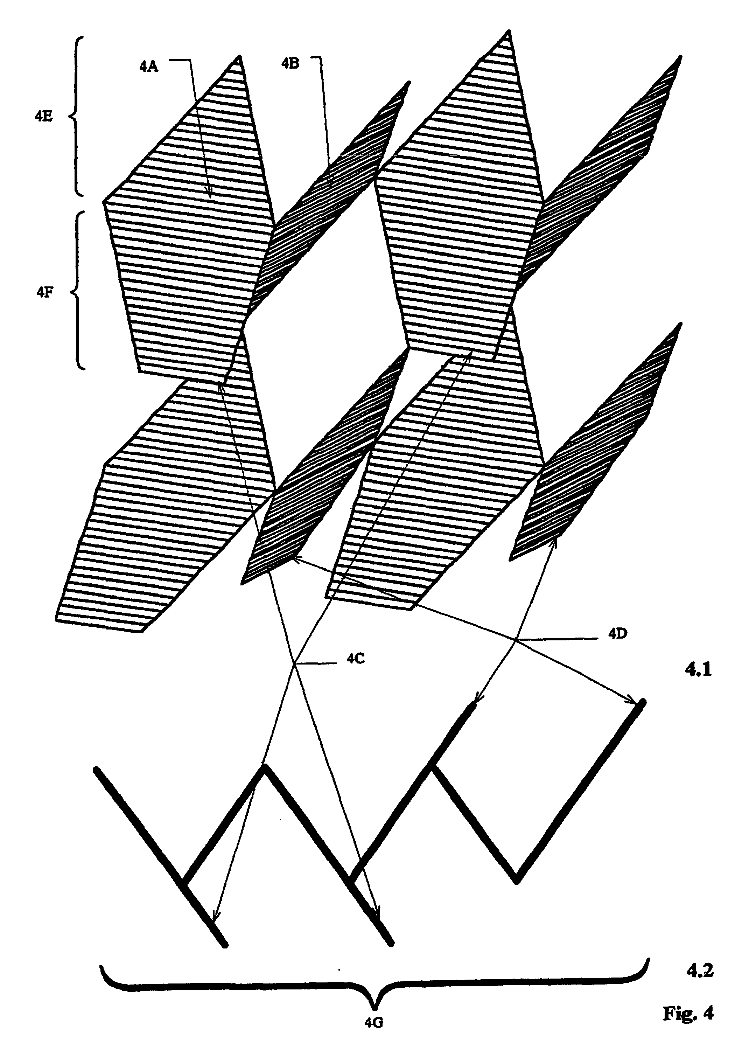

La figure 4 montre deux représentations schématiques d'une feuille de la figure 3 pliée en accordéon. 4.1 est une vue en perspective de la feuille pliée. 4.2. est une vue de dessus de la feuille dans l'axe des plis, sur laquelle on voit bien l'accordéon formé par la feuille (4G). Le pliage crée deux orientations de plan, caractérisées par les grisés différents des déflecteurs (4A et 4B). On peut remarquer les saillies (4C et 4D) qui sortent en dehors de la zone comprise entre les deux plans contenant les lignes de pli. On constate donc que les déflecteurs une fois pliés offrent au liquide une surface d'étalement (4E) « pointue » et symétrique par rapport à la ligne de plus grande pente, puis une surface de ruissellement élargie (4F).

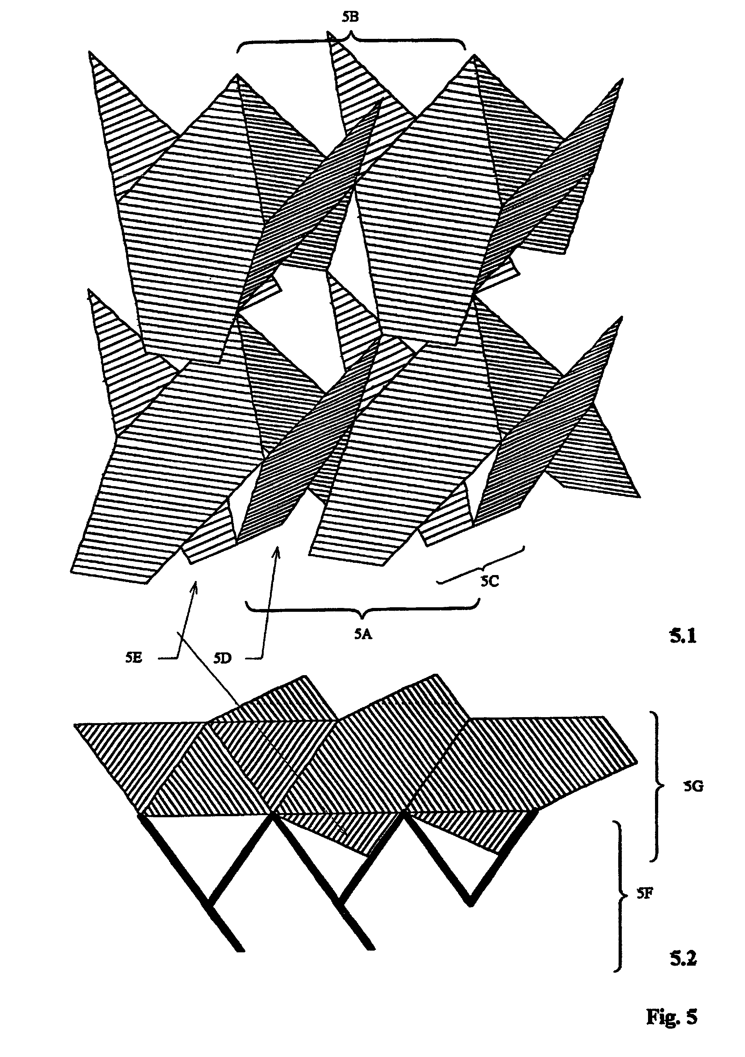

La figure 5 montre deux représentations schématiques de la structure obtenue par assemblage de deux bandes pliées selon la figure 4. 5.1 est une vue en perspective de la structure. 5.2 est une vue de dessus, dans l'axe des plis de la feuille de l'avant plan, sur laquelle on voit les deux bandes empilées 5.F et 5.G. On reconnaît à l'avant plan de 5.1 et en 5F la feuille en accordéon de la figure 4. A l'arrière plan de 5.1 et en 5G on a une feuille identique retournée de 180° par rapport à un axe vertical. Deux ventilateurs superposés sont créés par cette structure (5A et 5B). On remarque que ces ventilateurs sont de deux types différents : 5A est un ventilateur « fermé » par rapport au centre de rotation; c'est à dire que l'élargissement de la surface de ruissellement est logée du côté du centre de rotation, offrant ainsi un passage plus étroit au gaz. A l'inverse, 5B est un ventilateur « ouvert ». Sur une même verticale, on a alternance des deux types de ventilateur. Pour obtenir les ventilateurs tournant en sens inverse, il faudrait rajouter une feuille en accordéon supplémentaire. La structure obtenue en 5C indique pourquoi le bas des déflecteurs ne possède pas une surface de ruissellement symétrique. En effet, si la base des déflecteurs était rectangulaire symétrique, elle aurait, certes, une surface de ruissellement plus grande mais on obtiendrait en 5C, une jonction des arêtes des deux déflecteurs formant une sorte de gouttière horizontale. Une telle structure serait très préjudiciable, à la fois pour l'écoulement gazeux et pour l'écoulement liquide. Enfin, on peut remarquer que les saillies de la feuille en accordéon du premier plan (5D), s'insèrent exactement entre deux plis consécutifs de la feuille du second plan. De même, les saillies de la feuille en arrière plan (SE) s'insèrent entre les plis de la feuille du premier plan. Le positionnement relatif des feuilles entre elles est ainsi assuré dans toutes les directions et un simple serrage assure la stabilité de la structure.

Toutes les figures précédentes, volontairement schématiques ont pour but de montrer les principales caractéristiques de la structure. Il est bien évident que la structure de la figure 5 ne possède aucune tenue mécanique puisqu'il ne subsiste pas de matière aux points de liaison entre déflecteurs. Le principe de découpage-pliage, associé éventuellement à un emboutissage, permet d'obtenir une très grande variété de formes dans laquelle il faut puiser pour améliorer la structure, à la fois vis à vis de ses performances et de la simplicité de fabrication. Les figures qui suivent décrivent une structure industriellement valide, ayant une bonne tenue mécanique et incluant plusieurs améliorations, vis à vis de l'écoulement liquide et de la fabrication.

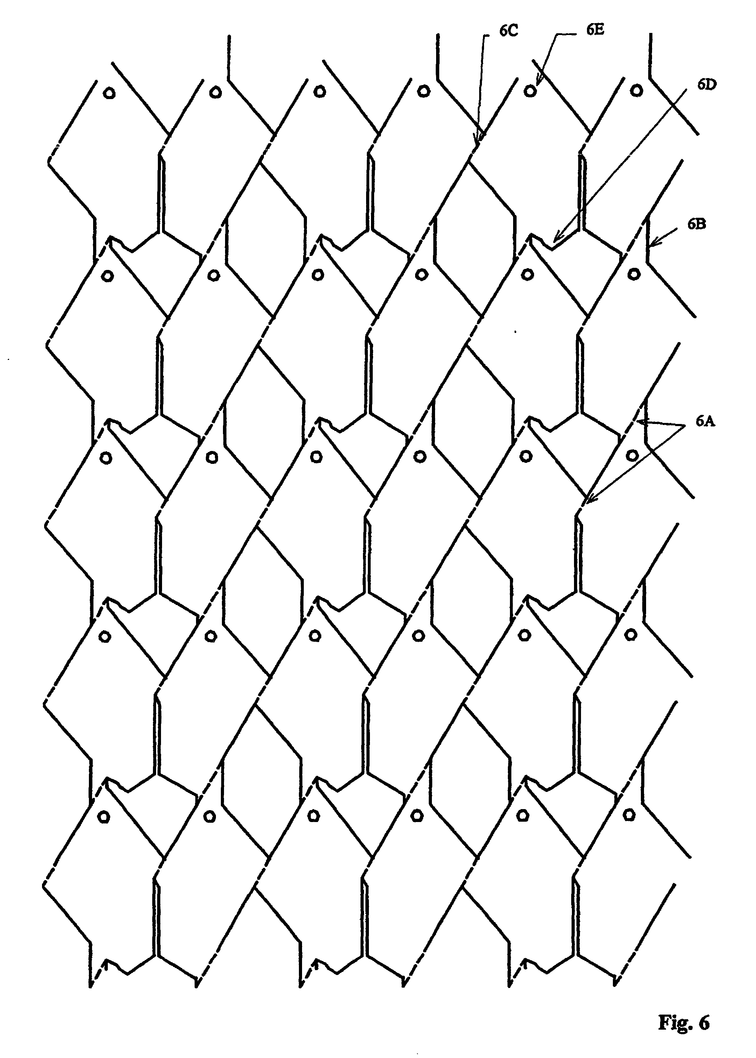

La figure 6 montre le découpage d'une feuille non pliée. Les lignes de pli (6A) sont représentée en pointillée ; on voit bien qu'elles sont discontinues. Afin d'obtenir une bonne ténue mécanique, il subsiste aux points de liaison 1/3 de la matière qui serait pliée s'il n'y avait pas de découpage. Afin de conserver une structure la plus proche possible de l'idéal, cette matière a été répartie inégalement sur les différents points de liaison. En 6B, rajouter une arête verticale est une bonne solution pour obtenir une grande longueur de pli en perdant un minimum de surface ouverte. En revanche, il faut éviter d'introduire une arête horizontale sur laquelle le liquide s'accumule, on a donc dessiné une ligne de pli qui constitue un segment d'arête (6C) permettant le partage latéral du liquide. La saillie en pointe 6D sert à la fois à la distribution du liquide et à solidariser les bandes entre elles. Enfin, on peut percer dans chaque déflecteur un trou (6E) qui permet le passage du liquide d'un côté à l'autre de la feuille.

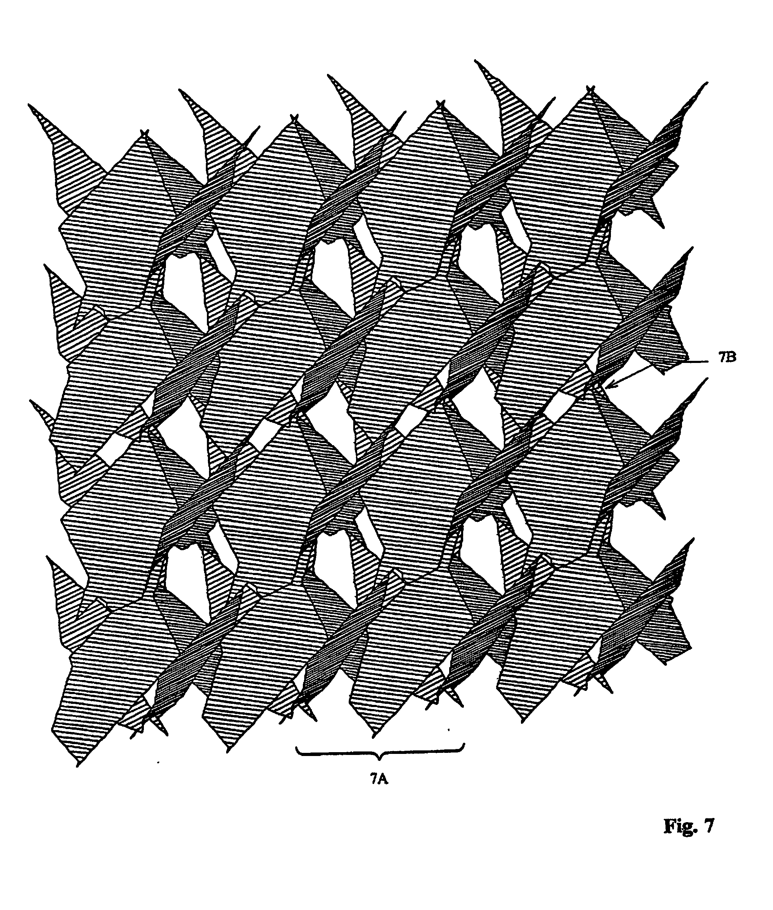

La figure 7 montre deux feuilles de la figure 6 pliées et assemblées. On remarque les séries de ventilateurs empilés (7A). On avait vu avec la figure 5 que les bandes étaient positionnées parfaitement par les saillies. Les lignes de pli introduisent par rapport à ce positionnement une imprécision égale à la longueur de la ligne de pli. Pour compenser cela, on peut au moment du pliage effectuer un embouti local sur la ligne de pli de façon à ce que le point le plus enfoncé soit centré sur le point d'appui. Ainsi, au moment de l'assemblage, la structure se maintient en position par simple serrage des bandes les unes contre les autres. En 7B, on voit un point d'appui où la saillie de la bande de l'arrière plan est équipée d'une pointe constituant à la fois une sorte d'attache solidarisant les bandes et un distributeur de liquide pour le remélange.

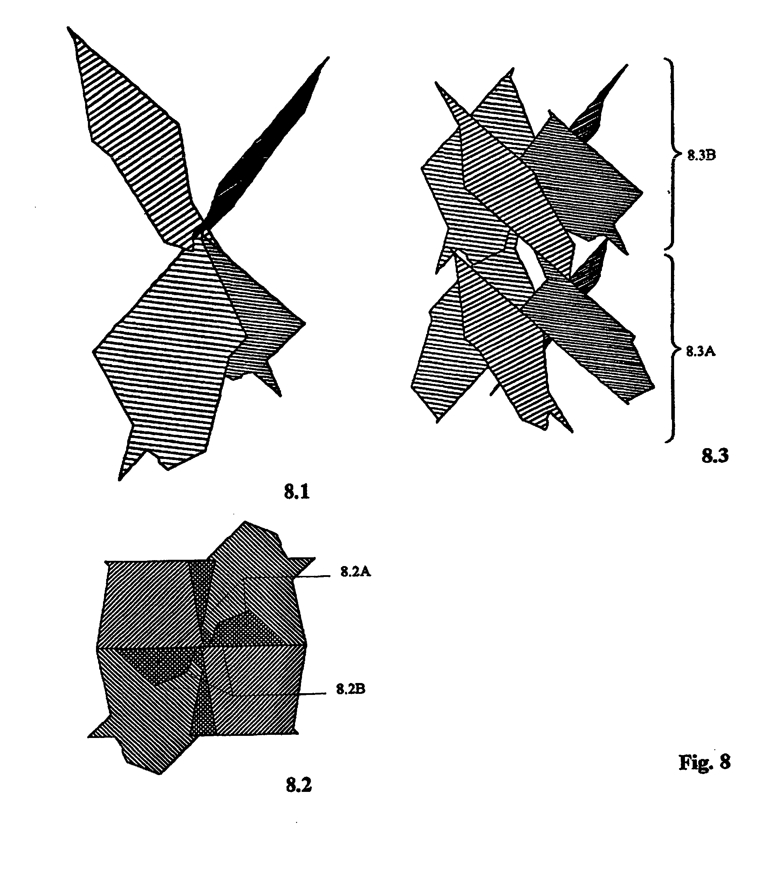

La figure 8 montre plusieurs agrandissements de la figure 7. La figure 8.1 montre un agrandissement de la zone d'appui 7B. La figure 8.2 montre une vue de dessus de 8.1 sans faces cachées sur laquelle on voit que les déflecteurs pénètrent dans l'espace situé à la verticale des déflecteurs adjacents de façon à créer une large surface de ruissellement (8.2A) et une alimentation en liquide d'une autre déflecteur (8.2B). La figure 8.3 montre deux types de ventilateurs superposés, créés par la structure : un ventilateur « ouvert » (8.3A) et un ventilateur « fermé » (8.3B).

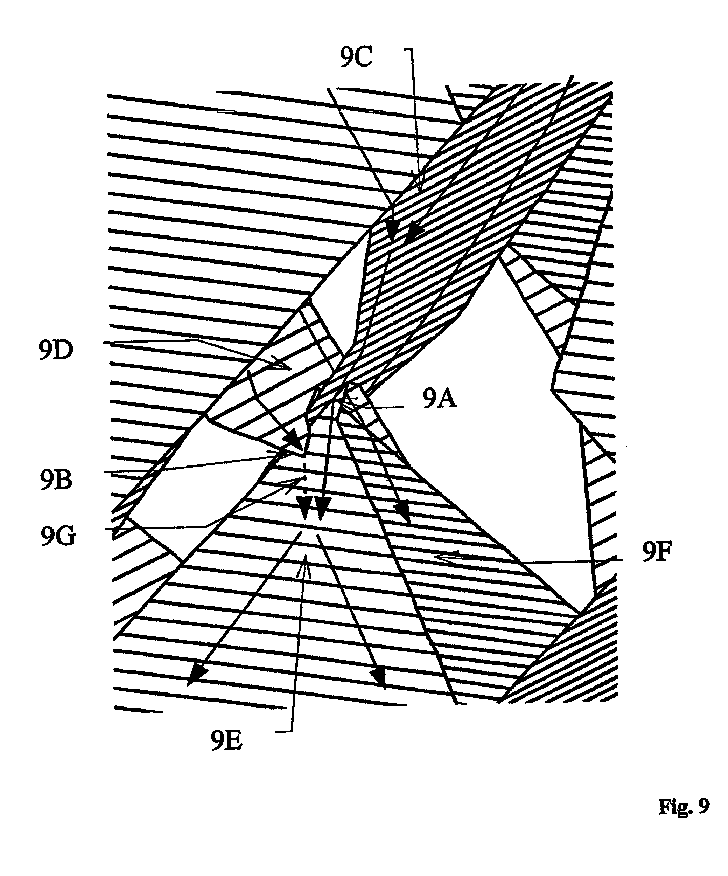

La figure 9 montre un détail de la figure 7, situé autour de 7B. Les déflecteurs 9D et 9F appartiennent à la feuille en accordéon du second plan tandis que 9C et 9E appartiennent à la feuille du premier plan. Les flèches noires figurent l'écoulement du liquide sur les déflecteurs. La structure est symétrique par rapport au point d'appui (9A). On voit la façon dont la pointe (9B) et son symétrique forment des attaches qui stabilisent la structure. Lorsqu'on présente les deux feuilles en accordéon face à face, la structure se déforme un peu et revient en place par élasticité lorsque la pointe a pris sa place définitive. En 9C, on a une zone de partage latéral du liquide puis de remélange. Le liquide qui coule sur la déflecteur de l'arrière plan se sépare en deux parties (9D). Une partie, après un passage en chute libre (9G), va mouiller la déflecteur du premier plan (9E) par l'intermédiaire du distributeur formé par la saillie en pointe (9B) et se mélange donc avec le liquide coulant sur la feuille en accordéon adjacente. L'autre partie du liquide reste sur la même feuille en accordéon et va mouiller le dessous du déflecteur 9F.

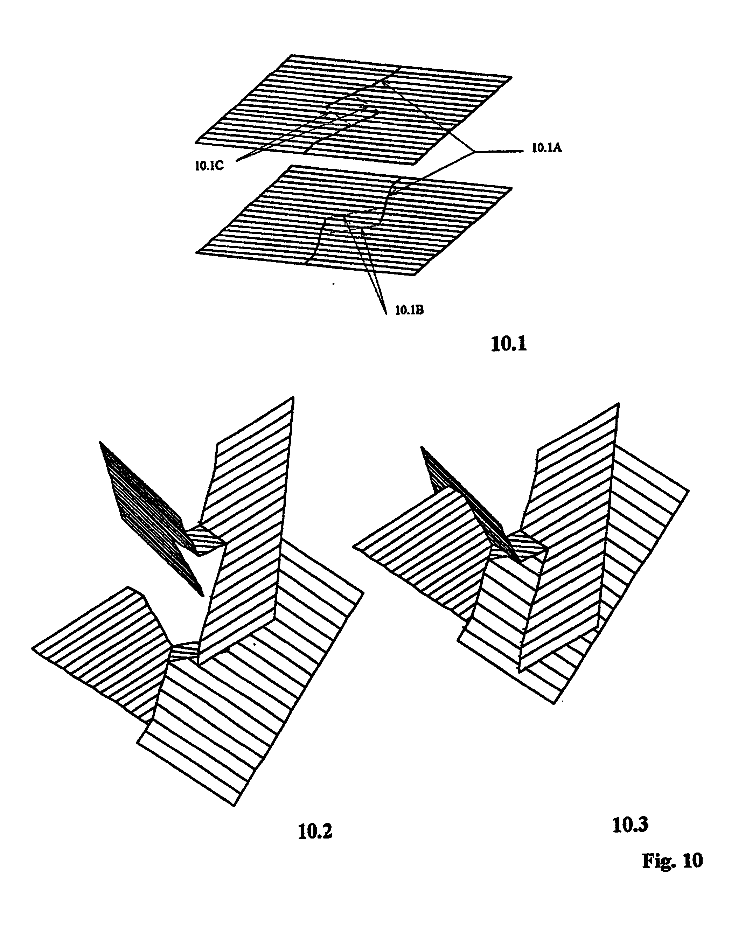

La figure 10 montre une possibilité d'emboîtement des feuilles à un point d'appui qui peut remplacer l'embouti local en un point comme 6C, c'est à dire le centre d'un ventilateur. Pour plus de lisibilité, les figures sont projetées de telle façon que la direction haut-bas parte vers l'arrière de la feuille. La figure 10.1 montre juste le détail de découpe. au point d'appui. La ligne de découpe est 10.1A. Ensuite, les feuilles sont pliées en 10.1C et en 10.1B. La figure 10.2 montre les deux feuilles pliées face à face avant emboîtement et la figure 10.3 montre l'emboîtement. L'emboîtement forme le centre d'un ventilateur et on peut voir les quatre orientations des déflecteurs sur la figure 10.3 à condition de redresser la figure.

L'emboîtement peut être conçu de manière à bloquer les deux degrés de liberté de translation en certains points de contact ou en tous. Ou bien il peut être conçu de manière à bloquer un degré de liberté de translations en certains points de contact et l'autre degré de liberté en d'autres points de contact.

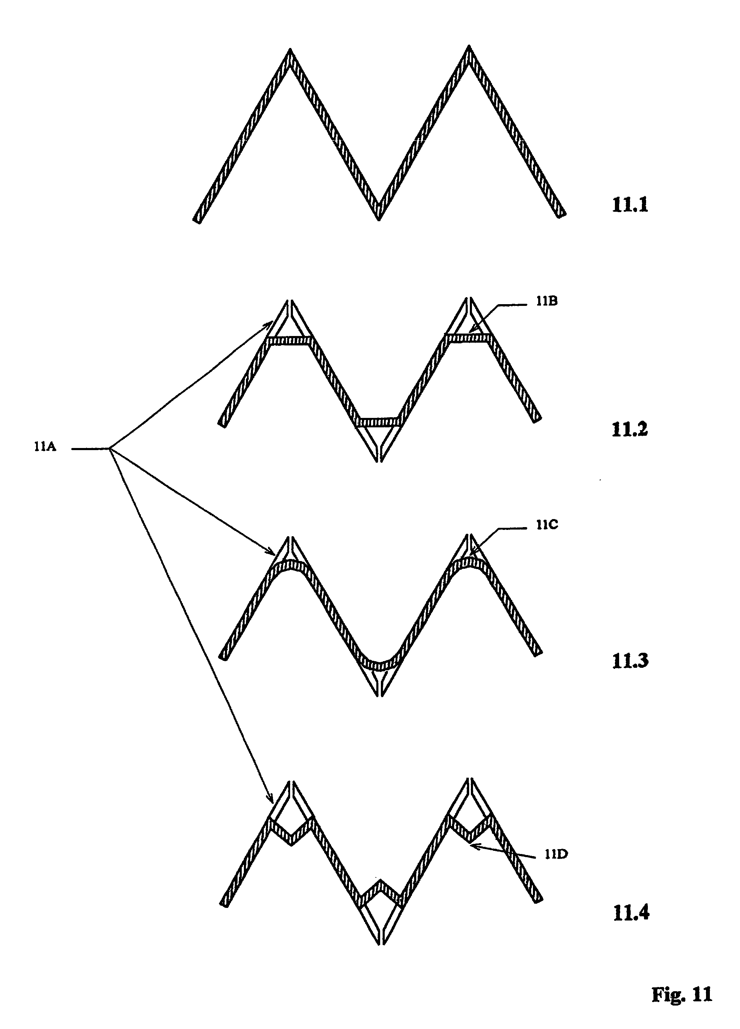

La figure 11 montre des feuilles 11 selon l'invention dans lesquelles une face d'appui est plane et délimitée par deux plis (11.2) ou est courbe (11.3) ou met en oeuvre plus de deux plis (11.4). Dans ces trois cas, la découpe permet aux bords des déflecteurs de faire des saillies (11A). La figure 11.1. montre un pliage en accordéon simple. La figure 11.2 montre le cas où la facette (11B) comprise à l'intérieur d'une paire de plis est plane, comme c'est le cas pour la figure 10. Dans la figure 11.3, à la place des plis, on a une surface courbe (11C). Enfin, dans la figure 11.4, on a un pli en plus (11 D).

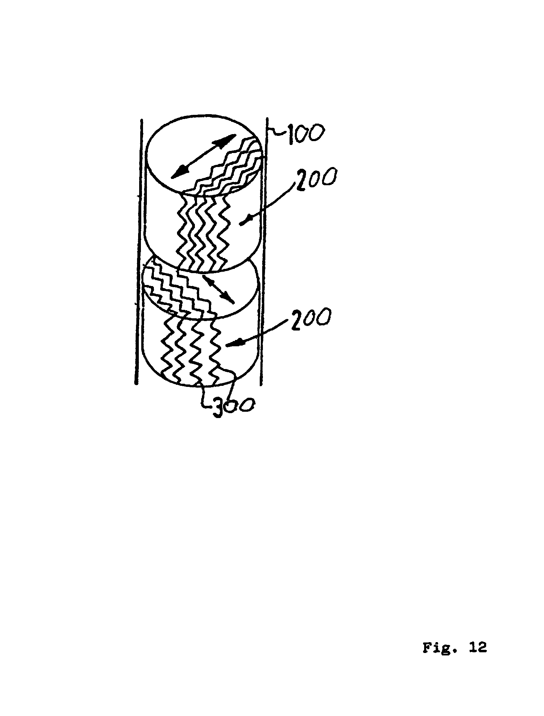

La figure 12 montre une virole 100 d'une colonne de distillation contenant deux blocs 200 de garnissage structurés constitués par un dispositif d'échange de chaleur et/ou de matière selon la présente invention.

Les feuilles pliées 300 sont assemblées obliquement à l'axe de la virole 100.

Le dispositif d'échange de chaleur et de matière de la présente invention peut être installé dans n'importe quelle colonne d'un appareil de séparation d'air, par exemple la colonne moyenne pression, la colonne basse pression, la colonne argon, la colonne de déazotation.

Chaque colonne peut contenir des dispositifs d'échange de chaleur et de matière selon la présente invention ainsi que les garnissages structurés classiques (du type ondulé croisé par exemple) et/ou les garnissages en vrac et/ou les plateaux.

La surface spécifique du dispositif d'échange de chaleur et de matière de la présente invention peut varier d'une section d'une colonne à une autre.

## Revendications

1. Dispositif d'échange de chaleur et/ou de matière comprenant des feuilles en accordéon obtenues par découpage et pliage de feuilles planes, les feuilles en accordéon étant placées côte à côte parallèlement à un plan vertical, les surfaces pleines des feuilles formant des déflecteurs plans, pliés courbes ou vrillés de ventilateurs fixes (1A, 1B, 5A, 5B, 7A, 8.3A, 8.3B), de façon à favoriser le mélange gazeux, chaque ventilateur étant constitué par quatre. déflecteurs (1C, 3E, 4A, 4B, 9C, 9D, 9E, 9F) dont les normales moyennes sont inclinées et sensiblement déduites les unes des autres par rotation autour d'axes verticaux, la somme des quatre angles de rotation étant 360° et les ventilateurs étant empilés en couches horizontales successives au sein desquelles chaque déflecteur fait partie de deux ventilateurs adjacents tournant en sens opposés et de telle façon qu'il y ait suffisamment d'espace entre deux déflecteurs adjacents pour le passage du gaz, **caractérisé en ce que** des déflecteurs possèdent des parties (3E, 4C, 4D, 5D, 5E, 6D, 9B, 11A) en saillie à l'extérieur de la zone comprise entre les deux plans contenant les lignes de pli de la feuille en accordéon correspondante.

2. Dispositif selon la revendication 1, dans lequel la partie inférieure de certains ou de tous les déflecteurs (1C, 3E, 4A, 4B, 9C, 9D, 9E, 9F) est dissymétrique.

3. Dispositif selon la revendication 1 ou 2, dans lequel la partie supérieure (2A, 4E) de certains ou de tous les déflecteurs (1C, 3E, 4A, 4B, 9C, 9D, 9E, 9F) est symétrique par rapport à la ligne de plus grande pente, et sensiblement en forme de V renversé, de façon à favoriser l'étalement du liquide.

4. Dispositif selon l'une des revendications précédentes, dans lequel certains ou tous les déflecteurs sont percés par un ou plusieurs trous (2D, 6E), avec ou sans symétrie d'axe vertical, de façon à favoriser le passage du liquide en dessous des déflecteurs.

5. Dispositif selon l'une des revendications précédentes, dans lequel certains ou tous les déflecteurs sont reliés à un ou plusieurs de leurs voisins dans un même plan horizontal par un segment d'arête commun (2E, 6C), arrondi, aplati ou embouti, de façon à permettre un partage latéral du liquide entre déflecteurs.

6. Dispositif selon l'une des revendications précédentes, dans lequel certains ou tous les déflecteurs sont reliés à un ou plusieurs de leurs voisins par un segment d'arête commun (2E, 6A, 6C), arrondi, aplati ou embouti, afin de solidariser les déflecteurs entre eux.

7. Dispositif selon l'une des revendications précédentes, dans lequel certains ou tous les déflecteurs pénètrent dans l'espace situé à la verticale d'un déflecteur adjacent.

8. Dispositif selon l'une des revendications précédentes, dans lequel certains ou tous les déflecteurs sont conçus de façon à alimenter en liquide un autre déflecteur, généralement à l'aide d'une pointe (6D, 8.2B, 9B), ou à collecter le liquide d'un autre déflecteur.

9. Dispositif selon l'une des revendications précédentes, dans lequel certains ou tous les couples de déflecteurs voisins possèdent des saillies (6D, 8.2B, 9B, 11A) et/ou des encoches permettant un emboîtement réciproque afin de solidariser les déflecteurs entre eux.

10. Dispositif selon l'une des revendications précédentes, dans lequel la partie inférieure de certains ou de tous les déflecteurs est au moins en partie élargie, de façon à conserver au liquide une surface de ruissellement (2B, 4F, 8.2A) la plus grande possible.

11. Dispositif selon l'une des revendications précédentes dans lequel un bout d'au moins deux déflecteurs (1C, 3E, 4A, 4B, 9C, 9D, 9E, 9F) forme une saillie (3C, 4C, 4D, 5D, 5E, 6D, 9B, 11A).

12. Dispositif selon la revendication 12 dans lequel une ou chaque saillie (3C, 4C, 4D, 5D, 5E, 6D, 9B, 11A) s'emboîte avec une autre saillie ou une encoche afin de solidariser les couches de ventilateurs.

13. Procédé de fabrication d'un dispositif selon l'une des revendications précédentes, dans lequel des feuilles planes de métal ou d'un autre matériau, sont découpées et pliées pour former des feuilles en accordéon (4G, 5F, 5G, 300), et les feuilles en accordéon (4G, 5F, 5G, 300) sont placées côte à côte, parallèlement à un plan vertical, les surfaces pleines (3E) formant des déflecteurs plans, pliés, courbes ou vrillés, des déflecteurs possédant des parties (3E, 4C, 4D, 5D, 5E, 6D, 9B, 11A) en saillie à l'extérieur de la zone comprise entre les deux plans contenant les lignes de pli de la feuille en accordéon correspondante.

14. Procédé de fabrication selon la revendication 13, dans lequel les feuilles en accordéon (4G, 5F, 5G, 300) sont percées à moins de 45% avant pliage.

15. Procédé de fabrication selon la revendication 13 ou 14, dans lequel la structure est constituée de feuilles en accordéon (4G, 5F, 5G, 300) sensiblement identiques et dans lequel les feuilles en accordéon de rang impair (5F) sont retournées par rapport aux feuilles de rang pair (5G) autour d'un axe vertical ou horizontal inclus dans le plan moyen des feuilles en accordéon.

16. Procédé de fabrication selon l'une des revendications 13 à 15, dans lequel le positionnement des feuilles en accordéon (4G, 5F, 5G, 300) est assuré par une zone d'appui (3D, 7B) permettant un emboîtement des feuilles et permettant aussi d'assurer la stabilité des feuilles en accordéon, une fois serrées les unes contre les autres.

17. Procédé de fabrication selon la revendication 16, dans lequel la zone d'appui (3D, 7B) est formée par un embouti local.

18. Procédé de fabrication selon la revendication 16 ou 17, dans lequel la zone d'appui (3D, 7B) est formée par découpage et pliage et/ou cintrage ou vrillage.

19. Procédé de fabrication selon l'une des revendications 13 à 18, le dispositif étant un dispositif selon la revendication 5, dans lequel les feuilles en accordéon sont percées et pliées de façon à relier les surfaces pleines par des lignes de pli (6C), courbes ou non, permettant l'échange de liquide entre déflecteurs adjacents.

20. Procédé de fabrication selon l'une des revendications 13 à 19; dans lequel les lignes de plis (3A, 3B, 6A, 6C) ne sont pas continues de façon à créer lesdites parties (3C, 4C, 4D, 5D, 5E, 6D, 11A) en saillie à l'extérieur de la zone comprise entre les deux plans contenant les plis.

21. Procédé de fabrication selon l'une des revendications 13 à 20, dans lequel des saillies (3C, 4C, 4D, 5D, 5E, 6D, 9B, 11A) permettent un positionnement des feuilles en accordéon par un emboîtement saillie et/ou encoche.

22. Procédé de fabrication selon l'une des revendications 13 à 21, dans lequel des saillies (3C, 4C, 4D, 5D, 5E, 6D, 9B, 11A) permettent de créer des distributeurs (6D, 8.2B, 9B) ou des collecteurs pour les déflecteurs d'une couche adjacente.

23. Procédé de fabrication selon l'une des revendications 13 à 22, le dispositif étant un dispositif selon la revendication 11, dans lequel le taux de perçage à moins de 45% des feuilles en accordéon (4G, 5F, 5G) permet de créer des larges surfaces de ruissellement (2B, 4F, 8.2A).

24. Procédé de séparation de gaz de l'air ou d'hydrocarbures, ou d'oxyde de carbone, ou d'isotopes dans une colonne de distillation comprenant au moins un dispositif selon l'une des revendications 1 à 12.

25. Installation de séparation de gaz de l'air ou d'hydrocarbures, ou d'oxyde de carbone, ou d'isotopes dans une colonne de distillation comprenant au moins un dispositif selon l'une des revendications 1 à 12.

## Patentansprüche

1. Vorrichtung zum Stoff- und/oder Wärmeaustausch, die plissierte Blätter umfasst, die durch Ausschneiden und Falten ebener Blätter erzielt werden, wobei die plissierten Blätter parallel zu einer senkrechten Ebene nebeneinander positioniert werden, wobei die vollen Flächen der Blätter ebene, gekrümmte, gefaltete oder verwundene Ablenker stationärer Ventilatoren (1A, 1B, 5A, 5B, 7A, 8.3A, 8.3B) bilden, so dass das gasförmige Gemisch begünstigt wird, wobei jeder Ventilator aus vier Ablenkern (1C, 3E, 4A, 4B, 9C, 9D, 9E, 9F) besteht, deren mittlere Senkrechten geneigt und merklich voneinander durch Drehung um senkrechte Achsen abgezogen sind, wobei die Summe der vier Drehwinkel 360° beträgt und die Ventilatoren in aufeinanderfolgenden horizontalen Schichten gestapelt sind, innerhalb welcher jeder Ablenker zu zwei nebeneinander liegenden Ventilatoren gehört, die in entgegengesetzte Richtungen drehen und zwar derart, dass ausreichend Platz für die Passage des Gases zwischen zwei nebeneinander liegenden Ablenkern besteht, **dadurch gekennzeichnet, dass** die Ablenker Teile (3E, 4C, 4D, 5D, 5E, 6D, 9B, 11A) besitzen, die aus der Zone zwischen den zwei Ebenen, die die Faltlinien des entsprechenden plissierten Blatts enthalten, nach außen stehen.

2. Vorrichtung nach Anspruch 1, bei welcher der untere Teil bestimmter oder aller Ablenker (1C, 3E, 4A, 4B, 9C, 9D, 9E, 9F) unsymmetrisch ist.

3. Vorrichtung nach Anspruch 1 oder 2, bei welcher der obere Teil (2A, 4E) bestimmter oder aller Ablenker (1C, 3E, 4A, 4B, 9C, 9D, 9E, 9F) in Bezug auf die Linie mit der größten Neigung symmetrisch ist und in etwa die Form eines umgekehrten V aufweist, so dass die Ausbreitung der Flüssigkeit begünstigt wird.

4. Vorrichtung nach einem der vorhergehenden Ansprüche, bei welcher bestimmte oder alle Ablenker von einem oder mehreren Löchern (2D, 6E) mit oder ohne Symmetrie der senkrechten Achse so durchbohrt sind, dass die Passage der Flüssigkeit unter den Ablenkern begünstigt wird.

5. Vorrichtung nach einem der vorhergehenden Ansprüche, bei der bestimmte oder alle Ablenker mit einem oder mehreren ihrer Nachbarn in einer gleichen horizontalen Ebene durch ein gemeinsames, abgerundetes, abgeflachtes oder vertieftes Kantensegment (2E, 6C) so verbunden sind, dass eine seitliche Teilung der Flüssigkeit zwischen den Ablenkern erlaubt wird.

6. Vorrichtung nach einem der vorhergehenden Ansprüche, bei der bestimmte oder alle Ablenker mit einem oder mehreren ihrer Nachbarn durch ein gemeinsames, abgerundetes, abgeflachtes oder vertieftes Kantensegment (2E, 6A, 6C) verbunden sind, um die Ablenker fest untereinander zu verbinden.

7. Vorrichtung nach einem der vorhergehenden Ansprüche, bei welchem bestimmte oder alle Ablenker in den Raum eindringen, der sich in der Senkrechten zu einem benachbarten Ablenker befindet.

8. Vorrichtung nach einem der vorhergehenden Ansprüche, bei dem bestimmte oder alle Ablenker so konzipiert sind, dass sie einen anderen Ablenker mit Flüssigkeit versorgen, im Allgemeinen mit Hilfe einer Spitze (6D, 8.2B, 9B), oder die Flüssigkeit eines anderen Ablenkers sammeln.

9. Vorrichtung nach einem der vorhergehenden Ansprüche, bei welcher bestimmte oder alle Paare benachbarter Ablenker Vorsprünge (6D, 8.2B, 9B, 11A) und/oder Kerben aufweisen, die ein gegenseitiges Verschachteln erlauben, um die Ablenker untereinander fest zu verbinden.

10. Vorrichtung nach einem der vorhergehenden Ansprüche, bei welcher der untere Teil bestimmter oder aller Ablenker mindestens zum Teil verbreitert ist, so dass für die Flüssigkeit eine möglichst große Rieselfläche (2B, 4F, 8.2A) gewahrt wird.

11. Vorrichtung nach einem der vorhergehenden Ansprüche, bei welcher ein Ende von mindestens zwei Ablenkern (1C, E3, 4A, 4B, 9C, 9D, 9E, 9F) einen Vorsprung (3C, 4C, 4D, 5D, 5E, 6D, 9B, 11A) bildet.

12. Vorrichtung nach Anspruch 12, bei welcher ein oder jeder Vorsprung (3C, 4C, 4D, 5D, 5E, 6D, 9B, 11A) sich mit einem anderen Vorsprung oder einer Kerbe verschachtelt, um die Ventilatorschichten fest zu verbinden.

13. Herstellungsverfahren einer Vorrichtung nach einem der vorhergehenden Ansprüche, bei dem ebene Blätter aus Metall oder aus einem anderen Werkstoff ausgeschnitten und gefaltet werden, um plissierte Blätter (4G, 5F, 5G, 300) zu bilden und die plissierten Blätter (4G, 5F, 5G, 300) nebeneinander parallel zu einer senkrechten Ebene positioniert werden, wobei die vollen Flächen (3E) ebene, gefaltete, gekrümmte oder verwundene Ablenker bilden, wobei Ablenker Teile (3E, 4C, 4D, 5D, 5E, 6D, 9B, 11A) besitzen, die aus der Zone, die zwischen den zwei Ebenen liegt, die die Faltlinien des entsprechenden plissierten Blatts enthalten, hervorstehen.

14. Herstellungsverfahren nach Anspruch 13, bei dem die plissierten Blätter (4G, 5F, 5G, 300) vor dem Falten zu weniger als 45 % durchbohrt werden.

15. Herstellungsverfahren nach Anspruch 13 oder 14, bei dem die Struktur aus plissierten Blättern (4G, 5F, 5G, 300) besteht, die in etwa identisch sind, und bei welchem die plissierten Blätter ungerader Reihen (5F) in Bezug auf die Blätter gerader Reihen (5G) um eine senkrechte oder horizontale Achse, die in der mittleren Ebene der plissierten Blätter enthalten ist, umgedreht sind.

16. Herstellungsverfahren nach einem der Ansprüche 13 bis 15, bei welchem die Positionierung der plissierten Blätter (4G, 5F, 5G, 300) von einer Auflagezone (3D, 7B) gewährleistet wird, die ein Verschachteln der Blätter erlaubt und auch erlaubt, die Stabilität der plissierten Blätter sicherzustellen, sobald sie aneinander gedrängt sind.

17. Herstellungsverfahren nach Anspruch 16, bei welchem die Auflagezone (3D, 7B) von einer lokalen Vertiefung gebildet wird.

18. Herstellungsverfahren nach Anspruch 16 oder 17, bei welchem die Auflagezone (3D, 7B) durch Ausschneiden und Falten und/oder Biegen oder Verdrehen gebildet wird.

19. Herstellungsverfahren nach einem der Ansprüche 13 bis 18, wobei die Vorrichtung eine Vorrichtung nach Anspruch 5 ist, bei welcher die plissierten Blätter so durchbohrt und gefaltet sind, dass die vollen Oberflächen durch Faltlinien (6C), die gekrümmt sind oder nicht, verbunden werden, so dass der Flüssigkeitsaustausch zwischen nebeneinander liegenden Ablenkern erlaubt wird.

20. Herstellungsverfahren nach einem der Ansprüche 13 bis 19, bei welchem die Faltlinien (3A, 3B, 6A, 6C) nicht fortgesetzt sind um die Teile (3C, 4C, 4D, 5D, 5E, 6D, 11A) zu schaffen, die aus der Zone zwischen den zwei Ebenen, die die Falten enthalten, hervorstehen.

21. Herstellungsverfahren nach einem der Ansprüche 13 bis 20, bei dem Vorsprünge (3C, 4C, 4D, 5D, 5E, 6D, 9B, 11A) ein Positionieren der plissierten Blätter durch ein hervorstehendes Verschachteln und/oder Kerbe erlauben.

22. Herstellungsverfahren nach einem der Ansprüche 13 bis 21, bei dem es Vorsprünge (3C, 4C, 4D, 5D, 5E, 6D, 9B, 11A) erlauben, Verteiler (6D, 8.2B, 9B) oder Sammler für die Ablenker einer benachbarten Schicht zu schaffen.

23. Herstellungsverfahren nach einem der Ansprüche 13 bis 22, wobei die Vorrichtung eine Vorrichtung nach Anspruch 11 ist, bei der es der Durchbohrungsprozentsatz zu weniger als 45 % der plissierten Blätter (4G, 5F, 5G) erlaubt, große Rieselflächen (2B, 4F, 8.2A) zu schaffen.

24. Verfahren zum Abscheiden von Gas aus Luft oder Kohlenwasserstoffen oder Kohlenoxid oder Isotopen in einer Destillationskolonne, die mindestens eine Vorrichtung nach einem der Ansprüche 1 bis 12 umfasst.

25. Anlage zum Abscheiden von Gas aus Luft oder Kohlenwasserstoffen oder Kohlenoxid oder Isotopen in einer Destillationskolonne, die mindestens eine Vorrichtung nach einem der Ansprüche 1 bis 12 umfasst.

## Claims

1. Heat- and/or mass-exchange device comprising concertinaed sheets obtained by cutting and folding flat sheets, the concertinaed sheets being placed side by side parallel to a vertical plane, the full surfaces of the sheets forming flat, folded, curved or twisted deflectors of stationary ventilators (1A, 1B, 5A, 5B, 7A, 8.3A, 8.3B), so as to promote gas mixing, each ventilator consisting of four deflectors (1C, 3E, 4A, 4B, 9C, 9D, 9E, 9F) whose mid-perpendiculars are inclined and approximately derived from each other by rotation about vertical axes, the sum of the four angles of rotation being 360° and the ventilators being stacked in successive horizontal layers within which each deflector forms part of two adjacent ventilators rotating in opposite directions and in such a way that there is enough space between two adjacent deflectors for the gas to pass through them, **characterized in that** deflectors possess parts (3E, 4C, 4D, 5D, 5E, 6D, 9B, 11A) projecting to the outside of the region lying between the two planes containing the fold lines of the corresponding concertinaed sheet.

2. Device according to Claim 1, in which the lower part of some or all of the deflectors (1C, 3E, 4A, 4B, 9C, 9D, 9E, 9F) is unsymmetrical.

3. Device according to Claim 1 or 2, in which the upper part (2A, 4E) of some or all of the deflectors (1C, 3E, 4A, 4B, 9C, 9D, 9E, 9F) is symmetrical with respect to the line of greatest slope and is substantially in the shape of an inverted V, so as to promote spreading of the liquid.

4. Device according to one of the preceding claims, in which some or all of the deflectors are drilled with one or more holes (2D, 6E), with or without vertical axis symmetry, so as to encourage the liquid to pass under the deflectors.

5. Device according to one of the preceding claims, in which some or all of the deflectors are connected to one or more of their neighbours in the same horizontal plane by a common edge segment (2E, 6C) which is rounded, flattened or depressed, so as to allow lateral partition of the liquid between deflectors.

6. Device according to one of the preceding claims, in which some or all of the deflectors are connected to one or more of their neighbours by a common edge segment (2E, 6A, 6C) which is rounded, flattened or depressed, so as to fasten the deflectors together.

7. Device according to one of the preceding claims, in which some or all of the deflectors penetrate the space lying in the vertical of an adjacent deflector.

8. Device according to one of the preceding claims, in which some or all of the deflectors are designed so as to feed another deflector with liquid, generally with the aid of a tip (6D, 8.2B, 9B), or to collect the liquid from another deflector.

9. Device according to one of the preceding claims, in which some or all of the pairs of neighbouring deflectors have projections (6D, 8.2B, 9B, 11A) and/or notches allowing mutual interlocking so as to fasten the deflectors together.

10. Device according to one of the preceding claims, in which the lower part of some or all of the deflectors is at least partly widened, so as to maintain as high as possible a trickling surface area (2B, 4F, 8.2A) for the liquid.

11. Device according to one of the preceding claims, in which one end of at least two deflectors (1C, 3E, 4A, 4B, 9C, 9D, 9E, 9F) forms a projection (3C, 4C, 4D, 5D, 5E, 6D, 9B, 11A).

12. Device according to Claim 11, in which one or each projection (3C, 4C, 4D, 5D, 5E, 6D, 9B, 11A) interlocks with another projection or a notch so as to fasten the layers of ventilators.

13. Process for manufacturing a device according to one of the preceding claims, in which flat sheets of metal or of another material are cut and folded in order to form concertinaed sheets (4G, 5F, 5G, 300), and the concertinaed sheets (4G, 5F, 5G, 300) are placed side by side, parallel to a vertical plane, the full surfaces (3E) forming flat, folded, curved or twisted deflectors, deflectors possessing parts (3E, 4C, 4D, 5D, 5E, 6D, 9B, 11A) projecting to the outside of the region lying between the two planes containing the fold lines of the corresponding concertinaed sheet.

14. Manufacturing process according to Claim 13, in which the concertinaed sheets (4G, 5F, 5G, 300) are at least 45% drilled before folding.

15. Manufacturing process according to Claim 13 or 14, in which the structure consists of approximately identical concertinaed sheets (4G, 5F, 5G, 300) and in which the concertinaed sheets of odd row (5F) are turned upside down with respect to the sheets of even row (5G) about a vertical or horizontal axis lying in the mid-plane of the concertinaed sheets.

16. Manufacturing process according to one of Claims 13 to 15, in which the concertinaed sheets (4G, 5F, 5G, 300) are positioned by means of a bearing region (3D, 7B) enabling the sheets to be interlocked and also, once they have been locked against each other, ensuring that the concertinaed sheets are stable.

17. Manufacturing process according to Claim 16, in which the bearing region (3D, 7B) is formed by a local depression.

18. Manufacturing process according to Claim 16 or 17, in which the bearing region (3D, 7B) is formed by cutting and folding and/or bending or twisting.

19. Manufacturing process according to one of Claims 13 to 18, the device being a device according to Claim 5, in which the concertinaed sheets are drilled and folded so as to connect the solid surfaces by fold lines (6C), which may or may not be curved, allowing liquid exchange between adjacent deflectors.

20. Manufacturing process according to one of Claims 13 to 19, in which the fold lines (3A, 3B, 6A, 6C) are not continuous so as to create the said parts (3C, 4C, 4D, 5D, 5E, 6D, 11A) projecting to the outside of the region lying between the two planes containing the folds.

21. Manufacturing process according to one of Claims 13 to 20, in which projections (3C, 4C, 4D, 5D, 5E, 6D, 9B, 11A) enable the concertinaed sheets to be positioned by projection and/or notch interlocking.

22. Manufacturing process according to one of Claims 13 to 21, in which projections (3C, 4C, 4D, 5D, 5E, 6D, 9B, 11A) enable distributors (6D, 8.2B, 9B) or collectors to be created for the deflectors of an adjacent layer.

23. Manufacturing process according to one of Claims 13 to 22, the device being a device according to Claim 11, in which the at least 45% degree of perforation of the concertinaed sheets (4G, 5F, 5G) enables wide trickling surfaces (2B, 4F, 8.2A) to be created.

24. Process for the separation of gases from air or of hydrocarbons, or of carbon monoxide, or of isotopes in a distillation column comprising at least one device according to one of Claims 1 to 12.

25. Plant for the separation of gases from air or of hydrocarbons, or of carbon monoxide, or of isotopes in a distillation column comprising at least one device according to one of Claims 1 to 12.
